# EUROPEAN PATENT APPLICATION

(11) **EP 3 128 166 A1**
(43) Date of publication of application: **08.02.2017**
(21) Application number: 16182321.6
(22) Date of filing: 02.08.2016
(51) Int. Cl.: F02M 21/02, F02M 31/125, F02D 19/02

(54) **SYSTEM FOR THERMALLY CONDITIONING GASEOUS FUEL**

(30) Priority: 03.08.2015 IT UB20152802
(71) Applicant: Metatronix S.r.l., 10040 Volvera (TO) (IT)
(72) Inventor: BRUNETTI, Stefano, I-10040 Volvera (TO) (IT); BERTRAND, Emilio, I-10040 Volvera (TO) (IT); MILETTO, Giuseppe, I-10040 Volvera (TO) (IT)
(74) Representative: Frontoni, Stefano

(57) **Abstract**

Described herein is a thermal-conditioning system for a system for supplying gaseous fuel in an the internal-combustion engine of a vehicle, which is characterized in that it envisages a first device for heating the gaseous fuel and a second device for heating the injectors of the fuel-supply system. A control unit is purposely designed for governing the two devices on the basis of the operating conditions of the engine.

## Description

The present invention relates to a thermal-conditioning system for a system for supplying gaseous fuel in an internal-combustion engine of a vehicle.

In particular, the present invention refers to the sector of systems for supplying natural gas. As is known in the art, natural gas is stored in tanks either in liquid form (liquid natural gas - LNG) or in gaseous form (compressed natural gas - CNG). Between the tank and the connector of the fuel in which the injectors are arranged, the supply systems in question comprise a series of devices set in series, designed to regulate the flow and the pressure of the gas supplied to the manifold.

A constraint of operation for these fuel-supply systems is represented by the fact that the temperature of the gas supplied to the injectors cannot drop below a certain threshold that is indicated as product specification for any type of injector. Below this threshold, injectors can in fact undergo malfunctioning, for example sticking, or else even mechanical failure.

With reference to LNG, this is contained within the tank in the liquid state, at a temperature of around -150°C. The supply systems prearranged for operating with LNG have, directly downstream of the tank, a heat exchanger, which has the purpose of vaporising and heating the natural gas. This heat exchanger uses as conditioning fluid the cooling water of the engine.

At cold starting of the vehicle, the heat exchanger in question may, however, not be able to heat adequately the natural gas that is supplied to the injectors, and this possibility can even lead to the fuel-supply system being put out of use on account precisely of the problems that may afflict injectors at low temperatures.

Also in applications with CNG, there may present critical situations due to the low temperatures of the gas. In fact, even though the gas is not cryogenised, before being supplied to the injectors it is in any case subjected to processes of expansion that cause a marked lowering of the temperature thereof, and this circumstance, in concomitance with given external environmental conditions, may even bring the gas to temperatures well below the critical threshold of the injectors. The risk in this sense is evidently accentuated during cold starting of the engine, when those mechanisms of indirect transmission of the heat produced by the engine that could limit cooling of the gas are in fact altogether absent.

In the sector in question, there have already been proposed in the art solutions that attempt to solve the problem of heating of the gas supplied to the injectors, with particular attention paid to the phase in which the energy self-produced by the engine is not sufficient.

In this connection, particular reference may be made to the documents Nos. CN 20 31 14 459U, KR20050109037, and KR20050109038, which describe solutions that envisage, along the natural-gas supply line, a heat-exchange unit made up of two successive stages, a first stage in which the gas is heated via the water for cooling the engine, and a second stage, which operates via an electrical resistance and is designed to be activated during engine starting. These known solutions, however, present a limited level of effectiveness and operativeness.

The object of the present invention is, instead, to provide a thermal-conditioning system that is able to intervene in a more effective way on the supply system.

A further object of the present invention is then to provide a management of the system that is integrated and co-ordinated with the rest of the control of the vehicle in the perspective of a greater operating efficiency.

Yet a further object of the present invention is to provide a system that is particularly suitable also for retrofit applications on vehicles.

One or more of the objects referred to are achieved by a system presenting the characteristics specified in Claim 1.

As will be seen, the system described herein is characterized by an architecture and a control procedure that are altogether innovative.

The claims form an integral part of the technical teaching provided herein in relation to the invention.

Further characteristics and advantages of the invention will emerge clearly from the ensuing description with reference to the annexed drawings, which are provided purely by way of non-limiting example and in which:
- Figure 1 is a schematic illustration of an embodiment of the system described herein;
- Figure 2 illustrates an embodiment of an actuator of the system described herein; and
- Figure 3A, 3B and 3C illustrate an embodiment of the electrical resistance used in an actuator of the system described herein.

As mentioned at the start, the system described herein is a thermal-conditioning system for a system for supplying gaseous fuel in an internal-combustion engine of a vehicle. The system described herein has been specifically created for being used in natural-gas supply systems.

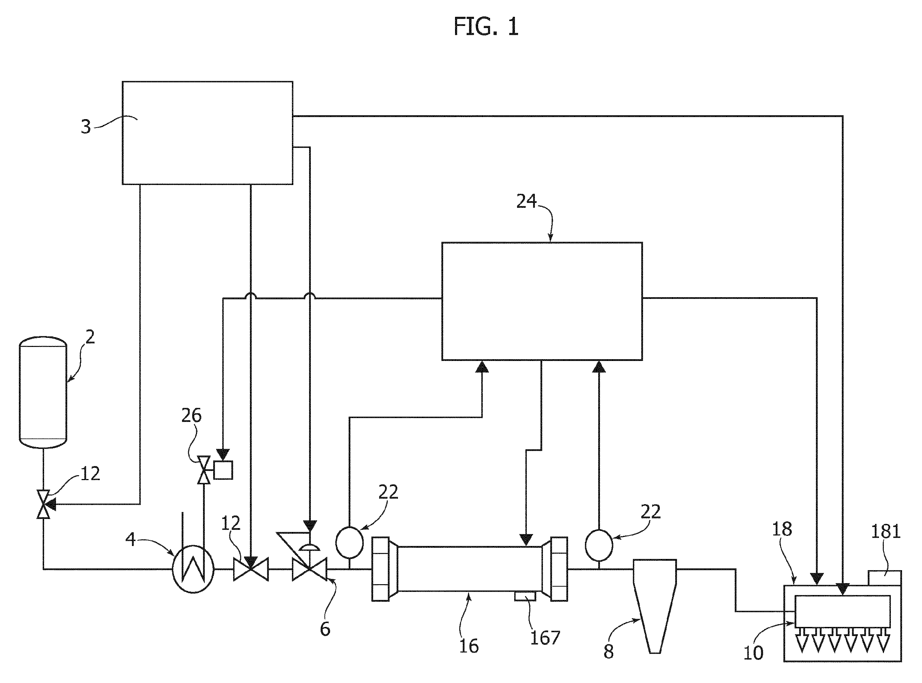

Figure 1 is a schematic illustration of an example of system for supply of LNG of an internal-combustion engine, in which the system described herein is integrated.

According to the conventional technique, the system in question comprises a tank 2 of a cryogenic type, stored in which is the natural gas in the liquid state at a temperature of approximately -150° C. Immediately downstream of the tank 2, the system comprises a heat exchanger 4, which has the function of vaporising and/or heating the natural gas, a pressure reducer 6, set downstream of the heat exchanger 4, and a filter 8 set downstream of the heat exchanger. The filter 8 is directly connected to the distribution fuel manifold 10. Arranged in the latter are the injectors for injection of the fuel into the various cylinders of the engine. A series of solenoid valves 12 are arranged along the supply line of the system to enable sectioning thereof during maintenance operations, in addition to providing possible safety functions. The engine control unit, designated by the reference number 3, is configured for governing these valves on the basis of appropriate activation/deactivation signals (for example, insertion of the ignition key). The control unit is moreover designed for control of the injectors.

The system described herein, associated to the gas-supply system, has the function of ensuring that the latter will operate within a range of pre-set thermal conditions.

In general, the system described herein comprises: a first heating device 16, designed to heat the gas supplied by the gas-supply system; a second heating device 18, designed to heat the injectors mounted in the fuel manifold 10; at least one temperature sensor 22, configured for detecting the temperature of the gas in a given point of the system; and a control unit 24 configured for governing the two heating devices 16 and 18.

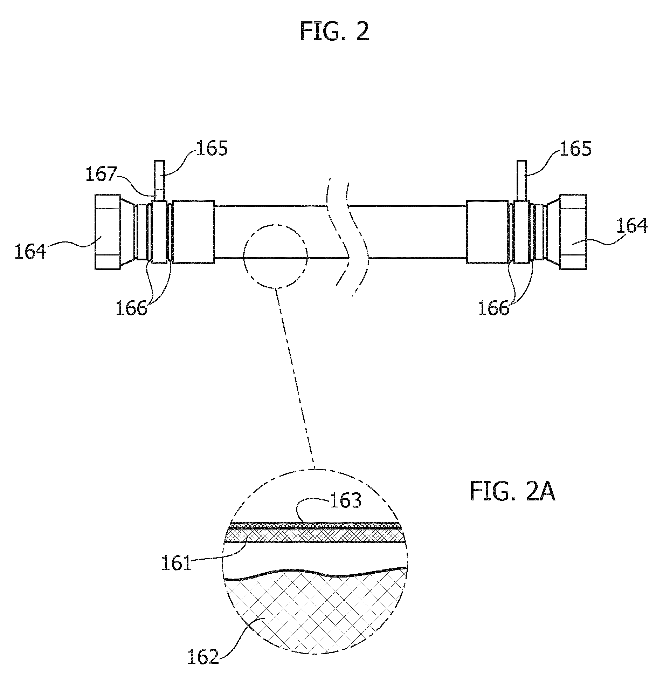

With reference to Figure 2, the device 16 is constituted by a tube 161, which is designed to be traversed by the gas supplied by the system and contains inside it an electrical resistance 162, which directly faces the flow of gas within the tube and is designed to heat it. In various preferred embodiments, the electrical resistance in question is provided in the form of metal wires interwoven so as to form a metal band. In various even more preferred embodiments, the band in question has a tubular structure.

The interwoven wires that constitute the resistance are preferably made of stainless steel. The tube is, instead, preferably made of insulating polymeric material, for example nitrile rubber or else Teflon. Possibly, the tube made of plastic material, above all if it is made of Teflon, may also be coated or covered with a protective sheath 163, preferably made of metal material, for example in the form of interwoven wires as is the internal electrical resistance.

By way of example, the metal band may be constituted by a series of strands numbering more than 10, preferably between 20 and 30, each strand being constituted by a number of filaments of between 2 and 5. The filaments may have a diameter of 0.25 mm.

Once again by way of example, the strands can be interwoven, being divided into two groups, and these groups being wound in a helix around one and the same axis, in opposite directions of winding.

The metal band is inserted into the tube according to an arrangement such that it identifies a generic tubular or helical structure that develops coaxially with respect to the tube and that preferably has an external diameter slightly smaller than the internal diameter of the tube so that the gas can lap also the outside of the structure (see the enlarged detail of Figure 2A).

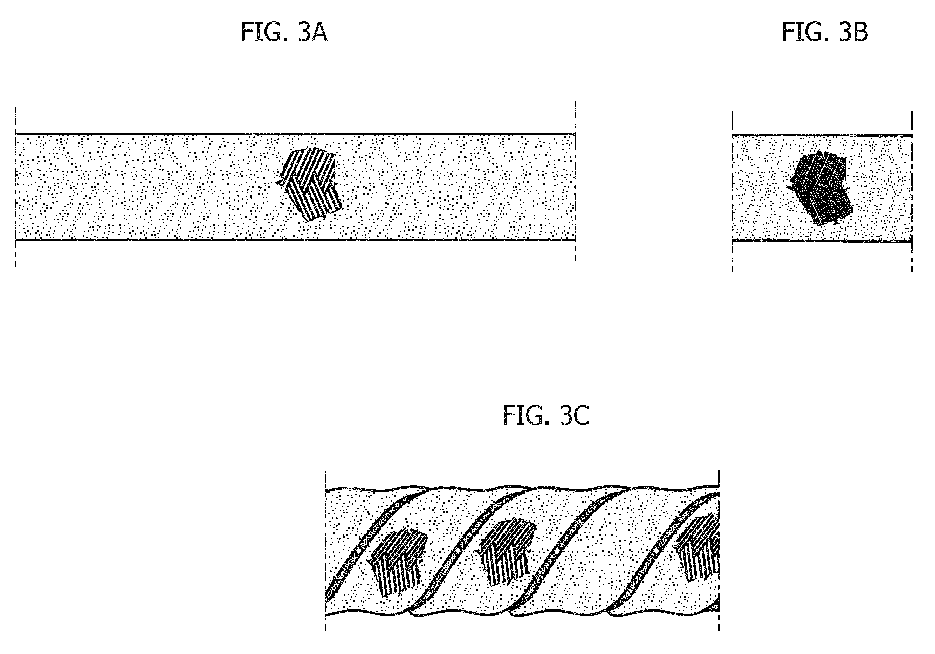

Figures 3A, 3B, and 3C illustrate a preferred embodiment of the electrical resistance in question. According to this embodiment (see in particular Figure 3A), the resistance is represented by a tubular metal band, constituted by interwoven wires, which has a length greater than that of the tube, in particular from two to five times greater. As may be seen in these figures, this band can be inserted into the tube according to two different modalities. In a first modality, illustrated in Figure 3B, the band is kept in its tubular form but is compacted axially until it is reduced substantially to the same length as the tube. Axial compacting of the band likewise causes an increase in its diameter until it reaches an external diameter a little smaller than the internal diameter of the tube. According to the second modality of application, illustrated in Figure 3C, the metal band is, instead, flattened to form a sort of ribbon or strip and in this configuration is wound in a helix and inserted into the tube.

The present applicant has noted that the two configurations described enable a value of resistance to be obtained that is able to develop an adequate heating capacity and at the same time limit the temperatures below the temperature of self-ignition of natural gas (570°C).

In various preferred embodiments, the tube has, at its opposite ends, connectors 164 for connection to the line of the fuel-supply system, and external terminals 165 for electrical supply of the electrical resistance. In this connection, in various preferred embodiments, the metal band has, at each of the two opposite ends of the tube, a flap turned up against the outer wall of the tube, applied on which is the electrical terminal 165. The latter is in turn fixed to the outer wall of the tube, for example snap fitted, and electrically insulated via the use of appropriate gaskets 166 arranged at the sides of the terminal. Moreover, in various preferred embodiments, associated to one of the two terminals (the left-hand one, in the example illustrated) is a thermal switch 167 designed to intervene so as to interrupt the flow of electrical current through the resistance, in the case where the resistance reaches a value of temperature above a certain threshold. This switch hence constitutes a safety element designed to prevent uncontrolled heating of the resistance.

As illustrated in Figure 1, the heating device 16 is preferably set downstream of the pressure reducer 6 and upstream of the filter 8. It should be noted that, thanks to its particular structure, the device is suited to being easily incorporated in already existing fuel-supply systems, simply by replacing one of the flexible tubes that conventionally form the supply line of this type of systems.

As referred to above, the system described herein further comprises a sensor 22 designed to detect the temperature of the gas that is supplied to the manifold 10. Preferably, the sensor 22 is positioned downstream of the device 16 so as to be able to detect the temperature of the gas after this has been possibly heated by the device. Alternative embodiments may, instead, envisage arrangement of the sensor upstream of the device 16 or, again, may envisage two temperature sensors set one upstream and the other downstream of the device. Wherever possible, as sensor of the system there may possibly also be used the temperature sensor that, in some of the supply systems of the type in question present on the market, is associated to the distribution manifold.

The control unit 24 mentioned above is configured for governing the heating device 16 as a function of the temperature signal received from the sensor 22. In various preferred embodiments, the control unit is configured for setting in relation the signal received from the sensor 22 with a reference value representing a threshold temperature and for governing actuation of the device 16 when the temperature detected by the sensor 22 is lower than or equal to the reference temperature. In preferred embodiments, the reference value referred to is directly stored in the control unit. This value represents a temperature of the gas above which, or starting from which, proper operation of the injectors is guaranteed.

The heating device 18 is, instead, constituted by a so-called thermal blanket, which is applied on the manifold 10 so as to be able to heat the injectors when it is activated. It should be noted that usually the injectors are carried by the manifold 10 according to an arrangement in which they give out on the outer surface of the manifold and project therefrom at least in part. The thermal blanket is hence applied so as to cover the exposed parts of the injectors. As thermal blanket it is possible, for example, to use the commercial product known as HTS® (Heating Textile Sandwich) produced by the company Termotex, after it has been appropriately shaped according to the particular shapes and overall dimensions of the manifold of the specific model of vehicle. It should be noted, again, that some types of gas-supply systems envisage, instead of the injectors, a series of proportional-control valves, which act, in effect, as injectors, are again arranged on the distribution manifold 10, and with their own casings give out on the outer surface of the manifold. In these applications, as described above, the thermal blanket is applied on the manifold 10 so as to cover the exposed parts of these valves.

Also the blanket in question is governed by the control unit 24. In various preferred embodiments, the unit 24 is in particular configured for controlling the blanket 18 as a function of the temperature signal received from the sensor 22, as in the case of the control that it carries out on the device 16. In this case, however, the temperature detected by the sensor 22 is used to make an estimate of the temperature of the injectors via the use of appropriate tables that enable matching between the temperature of the gas supplied and the temperature of the injectors, which are drawn up in the stage of development of the system. In effect, also in this case, the control unit is anyway configured for setting in relation the temperature measured with a reference value and for controlling the blanket 18 when the temperature detected is below this value. The reference value represents a temperature of the injectors above which, or starting from which, proper operation of the injectors is guaranteed.

In various preferred embodiments, likewise associated to the thermal blanket 18 is a thermal switch 181, which has the same safety function as the one described above with reference to the thermal switch 165 associated to the device 16.

Clearly, the two devices 16 and 18 are connected to the electrical system of the vehicle so as to be supplied by its battery.

In general, operation of the system described above envisages constant control of the temperature of the gas supplied in the system and actuation of one or both of the heating devices 16 and 18 as a function of the temperature detected.

When the control unit judges that the estimated temperature of the injectors and the temperature of the gas are lower than the corresponding reference values, for example during cold starting of the vehicle, it activates both of the devices 16 and 18 to bring the system into the normal operating conditions. In this connection, it should be noted that the unit 24 is configured for keeping the device 16 active until the temperature of the gas reaches or exceeds the corresponding threshold value. Instead, as regards the device 18, preferred embodiments envisage that the unit 24 is simply configured for keeping the device active for a pre-set time independently of the value of temperature reached. In any case, it is also possible to envisage that the unit will issue a command on the basis of the temperature reached, as is done for control of the device 16.

When the control unit judges that just the temperature of the gas is below the corresponding threshold value it actuates, instead, only the device 16 until the system is brought back into the normal working conditions, as mentioned above.

The system described herein is pre-arranged for intervening according to the modalities described above, or when the fuel-supply system by itself is unable to return into the normal operating conditions, or else when intervention by the system is in any case more efficient than heating performed by the heat exchanger 4 using the engine-cooling water. Instead, the system is pre-arranged for enabling exclusive use of the heat exchanger in the conditions where its use is certainly more effective and efficient, for example when the engine is in normal running conditions, and hence heat of the cooling water can be effectively exploited.

For it to be able to co-ordinate with the other heating means referred to, in various preferred embodiments, the system comprises a solenoid valve 26, which is associated to the circuit of the engine-cooling water to regulate the flow of water that is supplied to the heat exchanger 4 and is governed by the unit 24 on the basis of the state of the vehicle, for example as a function of the temperature of the cooling water. In the case of the example referred to, a signal line (not illustrated) is provided, connected to the unit 24, which transmits to the latter a signal indicating the temperature of the cooling water. The unit 24 is configured for preventing flow of water through the heat exchanger 4 in the condition of cold starting of the engine, at the same time activating, as has already been seen, one or both of the devices 16 and 18, and for supplying, instead, this flow, possibly varying its flow rate in a gradual way, once the temperature of the water reaches a given threshold value. At this temperature, the unit 24 can deactivate the two devices 16 and 18 completely. The threshold value in question may be selected so as to represent a thermal condition of the water, and more in general of the engine, for which an effective heating of the gaseous fuel and of the injectors both by the cooling water and by the thermal mass represented by the engine as a whole is guaranteed.

The system described herein has been illustrated with specific reference to an example of application in an LNG-supply system. It should be noted that the teachings provided above may in any case apply in the same way also to a CNG-supply system.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims. It should be noted that also falling within the scope of the present invention is the system for supplying fuel to the internal-combustion engine.

## Claims

1. A thermal-conditioning system for a system for supplying gaseous fuel in an internal-combustion engine of a vehicle,
wherein said system comprises:
- a fuel tank (2);
- a pressure reducer (6);
- possibly, a fuel filter (8);
- a distribution unit (10) comprising a series of devices for regulating the amount of gas introduced into the various cylinders of said engine; and
- a line that connects together said components so that the fuel can flow from said tank to said distribution unit,
said system comprising:
- a first device (16) for heating the fuel, which is designed to be set downstream of said pressure reducer with respect to the flow of the fuel along said line;
- a second device (18) for heating said devices for regulating the amount of gas of said distribution unit (10); and
- a control unit (24) configured for governing said first heating device and/or said second heating device as a function of the value of the temperature of said fuel detected upstream or downstream of said first device.

2. The system according to Claim 1, wherein said control unit (24) is configured for setting in relation a reference value with said detected temperature and for activating said first device (16) and/or said second device (18) on the basis of the given relation.

3. The system according to Claim 1 or Claim 2, wherein said second device (18) is constituted by a thermal blanket, which can be applied in contact with at least part of said devices of said distribution unit (10).

4. The system according to any one of the preceding claims, for a supply system that further comprises a heat exchanger (4), which operates with the water for cooling said engine and is set along said supply line for thermally conditioning the gas that traverses said line,
wherein said system comprises a valve (26) designed for control of the flow of water through said heat exchanger (4) and wherein said control unit (24) is configured for governing said control valve as a function of a temperature signal, in particular a signal indicating the temperature of the cooling water of said engine.

5. The system according to Claim 1, wherein said first device (16) has:
- a tube (161) designed to be traversed by the flow of fuel that passes in said line of said fuel-supply system and is equipped with connectors (164) for hydraulic connection of said tube to said line of said fuel-supply system;
- a metal band (162) set on the inside of said tube, designed to operate as electrical heating resistance; and
- a first electrical connector and a second electrical connector (165), which are electrically connected to said metal band, are carried by said tube, and are positioned on the outside of the latter.

6. The system according to Claim 5, wherein said band is constituted by interwoven metal wires.

7. The system according to Claim 5 or Claim 6, wherein said band has a generic tubular structure constituted by interwoven metal wires.

8. The system according to any one of Claims 5, 6, and 7, wherein said tube (161) is made of polymeric material and applied thereon is a protective sheath made of metal material (163).

9. The system according to Claim 8, wherein said sheath (163) has a generic tubular structure constituted by interwoven metal wires.

10. The system according to any one of the preceding claims, comprising a temperature sensor (22) for detecting said temperature of the fuel, which is designed to be set upstream or downstream of said first heating device.
